# EUROPEAN PATENT SPECIFICATION

(11) **EP 4 025 422 B1**
(45) Date of publication and mention of the grant of the patent: **31.05.2023**
(21) Application number: 21851786.0
(22) Date of filing: 20.04.2021
(51) Int. Cl.: B32B 27/18, B29C 45/14, B32B 7/12, B32B 27/08, B32B 27/20, B32B 27/32, B32B 27/34, B32B 27/36

(54) **METALLIZED BIAXIALLY ORIENTED POLYPROPYLENE (BOPP) FILM STRUCTURE**
STRUKTUR EINER METALLISIERTEN BIAXIAL ORIENTIERTEN POLYPROPYLEN (BOPP)-FOLIE
STRUCTURE DE FILM DE POLYPROPYLÈNE ORIENTÉ BIAXIALEMENT (BOPP) MÉTALLISÉ

(30) Priority: 25.11.2020 TR 202018960
(43) Date of publication of application: 13.07.2022
(73) Proprietor: SÜPER FILM AMBALAJ SANAYI VE TICARET A.S., Gaziantep (TR)
(72) Inventor: GENÇ, Mehmet Hayri, Gaziantep (TR); KALENDER, Kemal, Gaziantep (TR)
(74) Representative: Yalçiner Patent and Consulting Ltd.
(86) International application number: PCT/TR2021/050366
(87) International publication number: WO 2022/115062

(56) References cited:
- EP-A1- 2 127 852
- WO-A1-2008/030202
- JP-A- 2003 334 893
- JP-A- 2005 103 955
- US-A- 5 118 563
- US-A1- 2009 011 183
- US-A1- 2011 223 362

## Description

### Technical Field

The present invention relates to a laminate structure having at least one metallized film that is suitable for printing and slitting applications, used for injection moulding processes as a label film.

### Known State of the Art (Prior Art)

Metallized in-mould label structures are disclosed in US20110223362, US20130302591, US 20120052304 and AU2014266967. In the previous studies, metallized label film structures that can be used for in-mould applications are described and solution proposal for curling problems has been mentioned.

US 201110223362 A1 discloses a printed metalized in mould label (IML) or insert for use in manufacturing injection moulded or blow moulded drinkware or containers. The labels generally include a metalized film assembly that comprises a base substrate and a metalized layer applied thereon. One or more image or graphic layers are then either printed directly onto the metalized film assembly or laminated thereto. Protective substrates, films, or coatings are applied to the assembly to protect by sandwiching the one or more ink or printed layers between the protective layer and the metalized layer. A known disadvantage of this prior art is carrying out a lamination process afterwards printing which is an additional converting step that is uncommon for today's in-mould industry. Moreover, sandwiching the ink in between the laminate structure may create a weak interface between the laminated films and this may result in de-bonding during injection moulding process. Therefore the main differences of this document are the order of the processes and the solution to curling problems compared to the present invention described here.

US 10,286,628 B2 discloses barrier films, in-mould labels formed from barrier films, and containers incorporating in-mould labels with barrier properties. Films include multi-layer or composite films that include one or more layers of a barrier material. The films can be used to form labels in standard in-mould labeling processes such that standard robotics, moulds, and materials can be used. Preferably, the film can seal on itself such that an overlap seam can be made. The film has adequate desired barrier properties, i.e. water vapor, oxygen, light, aroma, and/or flavor retention barriers depending on the application, such as packaging of consumable products. Despite the above mentioned structure brings different alternatives for creating a barrier (inorganic solutions like metallization or polymeric solutions) layer for an inmould label design, there is no solution offered for any possible electric arc formation during electrostatic positioning of the metallized laminate which consist of a conductive layer in between.

AU 2014266967 B2 discloses a multilayer, metallized, laminate film employed to form in-mould labels, includes first and second multilayer structures adhesively bonded together. However, this publication does not offer any solution for possible electrostatic positioning of the label into the mould while improving the possible curling problem. As a result, the main difference of the present invention in comparison to this prior art is the variation on the label structure related to metallized layer and the surface in contact with the metal layer.

The laminate structures that contain a metallized layer in between have the problem of poor static holding capacity. The labels are placed and held on the inner wall of the mould by electrostatic load. The metallization layer on top of the laminate film dissipates the charge when the static charge is applied to the laminate. Therefore it is necessary to provide the outer surface of the laminated film holds the static charge for a short time interval that would be in contact with the mould when static load is applied to the outer surface of the laminate film that is not in contact with the mould.

The present invention thus aims at improving the electrostatic properties of a metallized in mould label article for static positioning of the label during injection phase while providing a structure resistant to curl or deform during the injection of the melted polymer into the mould.

### Brief Description of the Invention and its Aims

The primary aim of the invention is to overcome the problem of static label positioning of the metallized IML films and makes it suitable for this product to be used for all methods of label placement and positioning of the label films to the mould before the mould is closed.

The object of the invention is to develop an article having anti-static properties. The anti-static properties of the developed article enables this structure to be used either in roll to roll & roll to sheet printing processes or pre-cut sheet form label printing processes.

To enable the conductive behaviour of the metallized layer and applying the static charge through one side to another, the applicant has a unique solution while film forming and also during metallization process.

Industrial practices show that curling of the film is an important process problem for the in-mould films. Theoretically curling occurs due to thermal and mechanical stresses on the film and tends to behave differently due to different thermal expansion coefficients of the polymers inside the film layers. The curling problem may increase after lamination. Moreover, printing and slitting the film causes additional tension mismatching of the web while unwinding and rewinding the roll over and over specifically the laminate structures. The labels that have the curling problem cannot be placed inside the mould properly what creates uneven positioning and appearance of the label after the moulded article is formed.

The inventors of this art found a variation during the coextrusion of the film and film lamination processes so that the tendency of the film is minimized during formation and converting of the film.

In addition, it is also known fact that electrostatic force is inversely proportional to the square of the distance of the charges. So that curving of the label makes the positioning with static positioning much more difficult compared to other means of positioning.

As a result, the advantage offered by the invention is that the laminated films are produced and laminated in a way that there is no or minimum curling when the laminate is formed so that the label films can be printed and sheeted with various printing inks and designs and placed into the mould with any label positioning process including static positioning to form curve shaped moulds or flat shaped moulds.

### Definition of the Figures of the Invention

The figures that have been prepared in order to further describe the laminated composite film assembly have been defined below.

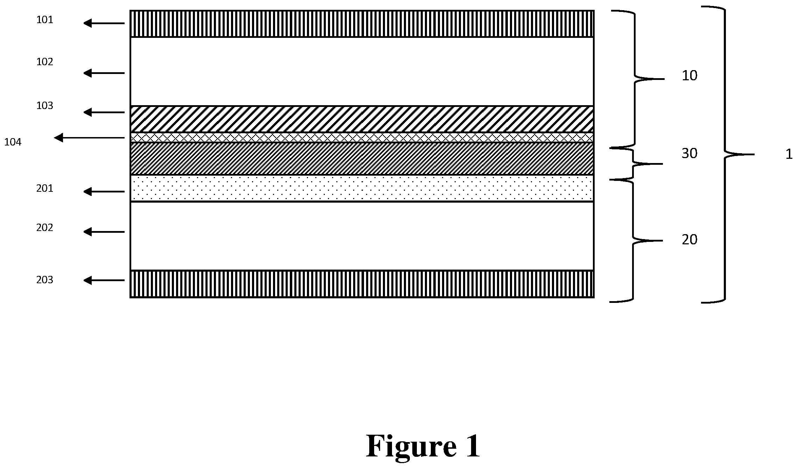

### Figure 1: Cross-section view of laminated composite film assembly

### Definitions of the parts/aspects/sections forming the invention

The parts and sections provided in the figures that have been prepared in order to further describe the laminated composite film assembly that have been developed by this invention, have each been numbered and the description of each reference number has been given below.
**1:** Laminate Film
**10:** Multilayer metallized film
**20:** Multilayer film
**30:** Adhesive layer
**101:** Outer layer of multilayer metallized film
**102:** Core layer of multilayer metallized film
**103:** Metallizable skin layer of multilayer metallized film
**104:** Metal layer
**201:** Laminated layer
**202:** Core layer of multilayer film
**203:** Outer layer of multilayer film

### Detailed Description of the Invention

The present invention relates to a label for in-mould moulding, which comprises the laminate film (1), comprising multilayer metallized film (10) and multilayer film (20) that is bonded with multilayer metallized film (10) by an adhesive layer (30).

The multilayer metallized film (10) is a polymeric film comprising outer layer of multilayer metallized film (101), metallizable skin layer of multilayer metallized film (103) containing organic or inorganic active ingredients inside the polymer matrix in the range of 500 ppm to 7500 ppm, core layer of multilayer metallized film (102), metal layer (104). Multilayer film (20) is a polymeric film comprising laminated layer (201), core layer of multilayer film (202) and outer layer of multilayer film (203).

The laminated film (1) is formed by joining different films. Preferably two films are bonded together to form the laminated film (1). The printed and shaped film regarding the design of the container or cup is placed inside the mould and joined together with molted polymer to form the end product. The laminate film (1) thickness is preferably 30 - 120 microns, more preferably 40 - 80 microns and most preferably 50- 70 microns. The thickness of the laminate film (1) mainly depends on the size of the container to be produced. Other dimensions of the label film (1) such as width and length completely depend on the design basis of the printing process and moulding process.

Multilayer metallized film (10) is a polymeric film preferably in the form of biaxially oriented polypropylene (BOPP) film and consists of polypropylene at a great extent. However, different polymers like polyethylene, polyester and polyamide can be blended or used solely to form such films. The multilayer metallized film (10) is more preferably consisting of polypropylene at a great extent and produced via tenter process. The multilayer metallized film (10) is biaxially oriented in two perpendicular direction. The multilayer metallized film (10) thickness is preferably 10 - 60 microns, more preferably 15 - 55 microns, most preferably 20 - 40 microns. The multilayer metallized film (10) may have gloss or a matt appearance regarding the polymers used in the skin layers.

The multilayer metallized film (10) consists of a core layer of multilayer metallized film (102) and two skin layers, which are outer layer of multilayer metallized film (101) and metallizable skin layer of multilayer metallized film (103). The multilayer metallized film (10) can be consisting of a multilayer structure in which layers are extruded through different extruders and joined at a block system connected through a die while the polymers are in molten state. The film (10) is more preferably a co-extruded film in which more than one extruder is used to form outer layer of multilayer metallized film (101), metallizable skin layer of multilayer metallized film (103) and core layer of multilayer metallized film (102) (A/B/C structure) or one extruder for skin layers and at least one extruder for core layer (A/B/A structure). The core layer of multilayer metallized film (102) may be a single layer or multilayer, meaning extruded through a single extruder or more than one extruder.

The outer layer of multilayer metallized film (101) is one of the outer layers of the laminated film (1). The layer (101) comprises a blend of polypropylene and polyethylene, more preferably a compound of polypropylene and polyethylene. Thickness of this outer layer of multilayer metallized film (101) is 0,5 - 5 microns, more preferably 1 - 4 microns, most preferably 1,5 - 3,5 microns. The outer layer of multilayer metallized film (101) may also comprise additives such as anti-blocking, slip or other functional masterbatches to ease the handling and converting of the film.

The core layer of multilayer metallized film (102) forms the backbone of the multilayer metallized film (10), that provides the stiffness and mechanical strength of the film. The core layer of multilayer metallized film (102) comprises thermoplastic polymers like polyethylene, polyester and polyamide can be blended or used solely, more preferably polypropylene is used at a great extent to form the core layer. The core layer of multilayer metallized film (102) may be consisting of a single layer or multilayer. The thickness of the core layer of multilayer metallized film (102) is preferably 8 - 55 microns, more preferably 15 - 40 microns, most preferably 20 - 30 microns. The core layer of multilayer metallized film (102) may also comprise additives such as slip and anti-static or other functional masterbatches to ease the handling and converting of the film.

Metallizable skin layer of multilayer metallized film (103) is the layer that is covered by a metal layer applied by a process called metallization, a subsequent process after film production. This metallizable skin layer of multilayer metallized film (103) comprises preferably polypropylene, more preferably a copolymer that contains propylene and ethylene monomers, most preferably a terpolymer that contains propylene, ethylene, butene-1 monomers. This metallizable skin layer of multilayer metallized film (103) contains organic or inorganic active ingredients inside the polymer matrix in the range of 500 ppm to 7500 ppm, which may be additives such as anti-blocking, or other functional masterbatches to ease the handling and converting of the film.

The metal layer (104) is applied onto multilayer metallized film (10) by vapor deposition method. Copper, aluminum, nickel, gold can be used for vacuum deposition, most preferably aluminum is used. The purity of aluminum used for vacuum deposition is preferably above 99%, more preferably above 99,5%, most preferably above 99,8%. The deposited metal layer (104) thickness can be in the range of 7,5 to 30 nanometers. More specifically the deposited metal layer (104) thickness can be in the range of 10 to 25 nanometers and most specifically the deposited metal layer (104) thickness can be in the range of 12 to 20 nanometers.

The metal layer (104) acts as a conductive layer due to its nature. During electrostatic label positioning, this metal layer (104) dissipates the electrostatic charge instantly, therefore electric current is unable to pass through one side to the other side of the film and the label cannot hold inside the mould cavity. In order to solve this problem, in this invention the roughness has been increased significantly so that the current can pass through the metal layer (104) without creating any electric arc. To achieve this, it was found that the addition of additives having non-miscible active ingredients such as anti-block agents helps to reduce the thickness of the metal layer to a great extent or non-metallized zones on the film surface so that the current can pass from one edge of the film to another. Therefore anti-block additives may be added to the metallizable skin layer of the multilayer metallized film (103) as organic or inorganic active ingredients inside the polymer matrix. There are some examples, including but not limited to polymethylmetacrylate, silica and derivatives of silica, silicate, siloxane and derivatives of siloxane. The amount of these active ingredients in the metallizable skin layer of the multilayer metallized film (103) are in the range of 500 ppm to 7500 ppm, more specifically in the range of 2000 to 6000 ppm, most specifically in the range of 3000 to 5000 ppm.

Multilayer film (20) is a polymeric film preferably in the form of biaxially oriented polypropylene (BOPP) film and consist of polypropylene at a great extent. However, different polymers like polyethylene, polyester and polyamide can be blended or used solely to form such films. The multilayer film (20) is more preferably consisting of polypropylene at a great extent and produced via tenter process. The multilayer film (20) is biaxially oriented in two perpendicular direction. The multilayer film (20) thickness is preferably 10 - 60 microns, more preferably 15 - 55 microns, most preferably 20 - 40 microns. The multilayer film (20) may have gloss or a matt appearance regarding the polymers used in the skin layers. Moreover, the multilayer film (20) can have white or white opaque appearance regarding the polymers used in the core layer of the film.

The multilayer film (20) consists of a core layer of multilayer film (202) and two skin layers which are laminated layer (201) and outer layer of multilayer film (203) . The multilayer film (20) can be consisting of multilayer structure in which layers are extruded through different extruders and joined at a block system connected through a die while the polymers are in molten state. The multilayer film (20) is more preferably co-extruded film in which more than one extruder is used to form laminated layer (201), outer layer of multilayer film (203) and core layer of multilayer film (202) (A/B/C structure) or one extruder for skin layers and at least one extruder for core layer (A/B/A structure). The core layer of multilayer film (203) may be a single layer or multilayer, meaning extruded through a single extruder or more than one extruder.

The laminated layer (201) is the layer that is sandwiched inside during the bonding process of the multilayer metallized film (10) and multilayer film (20). The laminated layer (201) comprises polypropylene to a great extent, more preferably a copolymer that contains propylene and ethylene monomers, most preferably a terpolymer that contains propylene, ethylene, butene-1 monomers. This laminated layer (201) may also comprise additives such as anti-blocking, slip or other functional masterbatches to ease the handling and converting of the film.

The core layer of multilayer film (202) forms the backbone of the multilayer film (20) that provides the stiffness and mechanical strength of the film. The core layer of multilayer film (202) consists of thermoplastic polymers like polyethylene, polyester and polyamide can be blended or used solely, more preferably polypropylene is used at a great extent to form the core layer. The core layer of multilayer film (202) may be consisting of a single layer or multilayer. The thickness of the core layer of multilayer film (202) is preferably 8 - 55 microns, more preferably 15 - 40 microns, most preferably 20 - 30 microns. The core layer of multilayer film (202) may also comprise additives such as slip and anti-static or other functional masterbatches to enable discharging the static load after a significant time that depends on the thickness and structure of the laminate. Moreover, the core layer of multilayer film (202) may include inorganic additives to provide an opaque, white opaque or white appearance.

The other skin layer that outer layer of multilayer film (203) is one of the outer layers of the laminated film (1). The outer layer of multilayer film (203) consists of a blend of polypropylene and polyethylene, more preferably a compound of polypropylene and polyethylene. Thickness of this outer layer of multilayer film (203) is 0,5 - 5 microns, more preferably 1 - 4 microns, most preferably 1,5 - 3,5 microns. This outer layer (203) may also comprises additives such as anti-blocking, slip or other functional masterbatches to ease the handling and converting of the film.

Multilayer metallized film (10) and multilayer film (20) are bonded to each other by an adhesive layer (30) with a process so-called lamination. Different types of lamination application methods are available such as dry bond lamination, wet bond lamination or extrusion lamination. During these applications, different types of adhesive systems are used as solvent based adhesives, solventless adhesives or water-based adhesives. Although the vast majority of the lamination applications are mentioned above, there are other types of adhesive systems and lamination processes which can be considered.

Preferably dry bond lamination processes with solventless adhesive systems are used during the lamination process to obtain the laminated film (1).

As noted earlier, in order to minimize the curling problem during processing of the laminated composite film (1) the multilayer metallized film (10) and multilayer film (20) are designed in a way to minimize the curling after lamination. The two multilayer films are aimed to have a symmetrical or a very close symmetric layer structure after forming the laminated composite film (1). Different embodiments of the art showed similar curling performance results by the same methodology explained in this study. In addition, special measures are performed during lamination process itself such as optimizing the tensions for the multilayer films.

Special measures are taken to provide a uniform thickness on both outer surfaces (101, 203) of the laminated composite film (1) because of introducing different type of polymers such as polyethylene which brings additional curling tendency as mentioned above.

## Claims

1. A label for in-mould moulding, which comprises a laminate film (1) comprising a
multilayer metallized film (10) and a multilayer film (20), that are joined together by an
adhesive layer (30), wherein the multilayer metallized film (10) is a polymeric film comprising outer layer of multilayer metallized film (101), metallizable skin layer of multilayer metallized film (103) containing organic or inorganic active ingredients inside the polymer matrix in the range of 500 ppm to 7500 ppm, core layer of multilayer metallized film (102), metal layer (104) and
wherein the multilayer film (20) is a polymeric film comprising laminated layer (201), core layer of multilayer film (202) and outer layer of multilayer film (203).

2. The label for in-mould moulding according to Claim 1, wherein the laminate film (1) thickness is between 30-120 microns.

3. The label for in-mould moulding according to Claim 1, wherein multilayer metallized film (10) is in the form of a biaxially oriented film.

4. The label for in-mould moulding according to Claim 1, said multilayer metallized film (10) comprises polyethylene, polypropylene, polyester and/or polyamide.

5. The label for in-mould moulding according to Claim 1, wherein the multilayer metallized film (10) thickness is between 10 - 60 microns.

6. The label for in-mould moulding according to Claim 1, wherein the thickness of the outer layer of multilayer metallized film (101) is between 0,5 - 5 microns.

7. The label for in-mould moulding according to Claim 1, wherein the outer layer of multilayer metallized film (101) comprises polypropylene and/or polyethylene.

8. The label for in-mould moulding according to Claim 1, wherein the thickness of the core layer of multilayer metallized film (102) is 8 - 55 microns.

9. The label for in-mould moulding according to Claim 1, wherein metallizable skin layer of multilayer metallized film (103) comprises polypropylene, a copolymer that contains propylene and ethylene monomers or a terpolymer that contains propylene, ethylene, butene-1 monomers.

10. The label for in-mould moulding according to Claim 1, wherein metallizable skin layer of multilayer metallized film (103) contains polymethylmethacrylate, silica, derivatives of silica, silicate, siloxane or derivatives of siloxane as organic or inorganic active ingredient.

11. The label for in-mould moulding according to Claim 1, wherein metal layer (104) comprises copper, aluminum, nickel or gold.

12. The label for in-mould moulding according to Claim 1, wherein multilayer film (20) is in the form of a biaxially oriented film.

13. The label for in-mould moulding according to Claim 1, said multilayer film (20) comprises polyethylene, polypropylene, polyester and/or polyamide.

14. The label for in-mould moulding according to Claim 1, wherein laminated layer (201) comprises polypropylene, a copolymer that contains propylene and ethylene monomers or a terpolymer that contains propylene, ethylene, butene-1 monomers.

15. The label for in-mould moulding according to Claim 1, wherein the core layer of multilayer film (202) comprises a thermoplastic polymer.

## Patentansprüche

1. Label zum Gießen in der Form, das eine Laminatfolie (1) umfasst, die eine mehrschichtige metallisierte Folie (10) und eine Mehrschichtfolie (20) umfasst, die durch eine Klebstoffschicht (30) miteinander verbunden sind, wobei die mehrschichtige metallisierte Folie (10) eine Polymerfolie ist, die eine Außenschicht aus einer mehrschichtigen metallisierten Folie (101), eine metallisierbare Hautschicht aus einer mehrschichtigen metallisierten Folie (103), die organische oder anorganische Wirkstoffe innerhalb der Polymermatrix im Bereich von 500 ppm bis 7500 ppm enthält, eine Kernschicht aus einer mehrschichtigen metallisierten Folie (102) und eine Metallschicht (104) umfasst und
wobei die Mehrschichtfolie (20) eine Polymerfolie ist, die eine laminierte Schicht (201), eine Kernschicht aus Mehrschichtfolie (202) und eine Außenschicht aus Mehrschichtfolie (203) umfasst.

2. Label zum Gießen in der Form nach Anspruch 1, wobei die Dicke der Laminatfolie (1) zwischen 30 und 120 Mikron beträgt.

3. Label zum Gießen in der Form nach Anspruch 1, wobei die mehrschichtige metallisierte Folie (10) in Form einer biaxial orientierten Folie ist.

4. Label zum Gießen in der Form nach Anspruch 1, wobei die mehrschichtige metallisierte Folie (10) Polyethylen, Polypropylen, Polyester und/oder Polyamid umfasst.

5. Label zum Gießen in der Form nach Anspruch 1, wobei die Dicke der mehrschichtigen metallisierten Folie (10) zwischen 10 und 60 Mikron beträgt.

6. Label zum Gießen in der Form nach Anspruch 1, wobei die Dicke der äußeren Schicht der mehrschichtigen metallisierten Folie (101) zwischen 0,5 und 5 Mikron beträgt.

7. Label zum Gießen in der Form nach Anspruch 1, wobei die Außenschicht der mehrschichtigen metallisierten Folie (101) Polypropylen und/oder Polyethylen umfasst.

8. Label zum Gießen in der Form nach Anspruch 1, wobei die Dicke der Kernschicht aus mehrschichtiger metallisierter Folie (102) 8 - 55 Mikron beträgt.

9. Label zum Gießen in der Form nach Anspruch 1, wobei die metallisierbare Hautschicht der mehrschichtigen metallisierten Folie (103) Polypropylen, ein Copolymer, das Propylen- und Ethylenmonomere enthält, oder ein Terpolymer, das Propylen-, Ethylen-, Buten-1-Monomere enthält, umfasst.

10. Label zum Gießen in der Form nach Anspruch 1, wobei die metallisierbare Hautschicht der mehrschichtigen metallisierten Folie (103) Polymethylmethacrylat, Kieselsäure, Derivate von Kieselsäure, Silikat, Siloxan oder Derivate von Siloxan als organischen oder anorganischen Wirkstoff enthält.

11. Label zum Gießen in der Form nach Anspruch 1, wobei die Metallschicht (104) Kupfer, Aluminium, Nickel oder Gold umfasst.

12. Label zum Gießen in der Form nach Anspruch 1, wobei die Mehrschichtfolie (20) in Form einer biaxial orientierten Folie ist.

13. Label zum Gießen in der Form nach Anspruch 1, wobei die Mehrschichtfolie (20) Polyethylen, Polypropylen, Polyester und/oder Polyamid umfasst.

14. Label zum Gießen in der Form nach Anspruch 1, wobei die laminierte Schicht (201) Polypropylen, ein Copolymer, das Propylen- und Ethylenmonomere enthält, oder ein Terpolymer, das Propylen-, Ethylen-, Buten-1-Monomere enthält, umfasst.

15. Label zum Gießen in der Form nach Anspruch 1, wobei die Kernschicht der Mehrschichtfolie (202) ein thermoplastisches Polymer umfasst.

## Revendications

1. Etiquette pour le moulage dans le moule, qui comprend un film stratifié (1) comprenant un film métallisé multicouche (10) et un film multicouche (20), qui sont joints ensemble par une couche adhésive (30), dans laquelle le film métallisé multicouche (10) est un film polymérique comprenant une couche extérieure de film métallisé multicouche (101), une couche de peau métallisable d'un film métallisé multicouche (103) contenant des ingrédients actifs organiques ou inorganiques à l'intérieur de la matrice polymère dans la gamme de 500 ppm à 7500 ppm, une couche d'âme d'un film métallisé multicouche (102), une couche de métal (104) et
dans laquelle le film multicouche (20) est un film polymérique comprenant une couche stratifiée (201), une couche d'âme de film multicouche (202) et une couche extérieure de film multicouche (203).

2. Etiquette pour moulage dans le moule selon la revendication 1, dans laquelle l'épaisseur du film stratifié (1) est comprise entre 30 - 120 microns.

3. Etiquette pour moulage dans le moule selon la revendication 1, dans laquelle le film métallisé multicouche (10) se présente sous la forme d'un film orienté biaxialement.

4. Etiquette pour moulage dans le moule selon la revendication 1, ledit film métallisé multicouche (10) comprend du polyéthylène, du polypropylène, du polyester et/ou du polyamide.

5. Etiquette pour moulage dans le moule selon la revendication 1, dans laquelle l'épaisseur du film métallisé multicouche (10) est comprise entre 10 - 60 microns.

6. Etiquette pour moulage dans le moule selon la revendication 1, dans laquelle l'épaisseur de la couche extérieure de film métallisé multicouche (101) est comprise entre 0,5 - 5 microns.

7. Etiquette pour moulage dans le moule selon la revendication 1, dans laquelle la couche extérieure du film métallisé multicouche (101) comprend du polypropylène et/ou du polyéthylène.

8. Etiquette pour moulage dans le moule selon la revendication 1, dans laquelle l'épaisseur de la couche d'âme du film métallisé multicouche (102) est de 8 - 55 microns.

9. Etiquette pour moulage dans le moule selon la revendication 1, dans laquelle la couche de peau métallisable du film métallisé multicouche (103) comprend du polypropylène, un copolymère qui contient des monomères de propylène et d'éthylène ou un terpolymère qui contient des monomères de propylène, d'éthylène, de butène-1.

10. Etiquette pour le moulage dans le moule selon la revendication 1, dans laquelle la couche de peau métallisable du film métallisé multicouche (103) contient du polyméthacrylate de méthyle, de silice, des dérivés de silice, du silicate, du siloxane ou des dérivés de siloxane comme ingrédient actif organique ou inorganique.

11. Etiquette pour moulage dans le moule selon la revendication 1, dans laquelle la couche métallique (104) comprend du cuivre, de l'aluminium, du nickel ou de l'or.

12. Etiquette pour moulage dans le moule selon la revendication 1, dans laquelle le film multicouche (20) se présente sous la forme d'un film orienté biaxialement.

13. Etiquette pour moulage dans le moule selon la revendication 1, ledit film multicouche (20) comprend du polyéthylène, du polypropylène, du polyester et/ou du polyamide.

14. Etiquette pour moulage dans le moule selon la revendication 1, dans laquelle la couche stratifiée (201) comprend du polypropylène, un copolymère qui contient des monomères de propylène et d'éthylène ou un terpolymère qui contient des monomères de propylène, d'éthylène, de butène-1.

15. Etiquette pour moulage dans le moule selon la revendication 1, dans laquelle la couche d'âme du film multicouche (202) comprend un polymère thermoplastique.
